# Europäisches Patentamt

(19) **European Patent Office**

**Office européen des brevets**

(11) Veröffentlichungsnummer: **0 131 642**

**B1**

(12) **EUROPÄISCHE PATENTSCHRIFT**

(45) Veröffentlichungstag der Patentschrift:
25.11.87

(51) Int. Cl.⁴: **G 01 M 17/00**

(21) Anmeldenummer: **83106928.1**

(22) Anmeldetag: **14.07.83**

(54) **Rollenprüfstand zur Kraftfahrzeugdiagnostik.**

(43) Veröffentlichungstag der Anmeldung:
23.01.85 Patentblatt 85/4

(45) Bekanntmachung des Hinweises auf die Patenterteilung:
25.11.87 Patentblatt 87/48

(84) Benannte Vertragsstaaten:
AT BE CH DE FR GB IT LI LU NL SE

(56) Entgegenhaltungen:
DE-A-2 512 418
GB-A-380 060
GB-A-968 758
US-A-2 297 644

(73) Patentinhaber: **Közlekedéstudományi Intézet, Thán Károly u. 3/5, Budapest 1119 (HU)**

(72) Erfinder: **Tamasi, Attila, Dipl.- Ing., Gulyás u. 16, H-1112 Budapest (HU)**
Erfinder: **Flamisch, Otto, Dr., Dipl.- Ing., Aradi u. 32, H-1062 Budapest (HU)**
Erfinder: **Laszlo, Arpád, Dipl.- Ing., Radna u. 7., H-1026 Budapest (HU)**
Erfinder: **Gal, Tibor, Dr., Dipl.- Ing., Mezőkövesd u. 6., H-1118 Budapest (HU)**

(74) Vertreter: **Patentanwälte Viering & Jentschura, Steinsdorfstrasse 6, D-8000 München 22 (DE)**

EP 0 131 642 B1

## Beschreibung

Die Erfindung betrifft einen Rollenprüfstand zur Diagnostisierung von Kraftfahrzeugen, der an die Räder des zu prüfenden Kraftfahrzeuges angeschlossene und miteinander verbundene Rollen mit gemeinsamer Achse, eine an die Rollen angeschlossene einstellbare Bremse, ein Planetengetriebe zwischen den Rollen und der Bremse und eine dem Planetengetriebe zugeordnete Kraftmeßzelle aufweist. Mit solchen Rollenprüfständen können Belastungen für die diagnostischen Messungen an Fahrzeugen erzeugt werden.

Der mit einem gegebenen Betriebszustand des Kraftfahrzeuges verbundene Kraftstoffverbrauch hängt einerseits von den Konstruktionsmerkmalen des Fahrzeuges und andererseits von dem Gesamtwirkungsgrad des Motors ab. Die Konstruktionsmerkmale verändern sich während des Betriebes nicht, es muß also zur Fahrzeugdiagnostik die Veränderung des Gesamtwirkungsgrades des Motors - die Gesamtwirkungsgradfunktion - beobachtet werden.

Es sind bereits solche Prüfstände zur Diagnostizierung von Fahrzeugen bekannt geworden, bei denen die Räder des Fahrzeuges auf Rollen laufen, die mit einer Wirbelstrombremse mit einer Erregerschaltung verbunden sind (DE-A-25 12 418). Das Belastungsmoment wird durch das Einstellen des Erregerstromes der Wirbelstrombremse erzeugt. Zur Messung dieses erzeugten Belastungsmomentes ist die Wirbelstrombremse auf einer Kipplagerung montiert und an einer Kraftmeßzelle abgestützt, aus deren Last auf das entstandene Belastungsmoment gefolgert wird. Mit den Rollen ist ein Tachometer verbunden und über das Tachometersignal, das Kraftmeßzellensignal und ein Bezugssignal wird der Rollenprüfstand zur Durchführung diverser Messungen wie der Beschleunigungsdaten des Fahrzeuges unter Simulierung dessen Gewichtes und Luftwiderstandes und einer ebenen oder ansteigenden Fahrbahn geregelt.

Da jedoch das Belastungsmoment am Ende der kinematischen Kette, d.h. aus dem Kippen der Wirbelstrombremse, ermittelt wird, wird die Messung von den Verlusten der ganzen kinematischen Kette sowie dem Wärmezustand der Wirbelstrombremse beeinflußt. Mit anderen Worten werden die Verluste des Prüfstandes selbst in das zu erzeugende Belastungsmoment "hineingemessen". An den Rollen entsteht also ein ganz anderes Belastungsmoment als das, welches aus dem Kippen der Wirbelstrombremse ermittelt wird.

Bei einem anderen bekannten Rollenprüfstand der eingangs erwähnten Art jedoch (GB-A-968 758), bei dem die einstellbare Bremse als Gebläserad ausgebildet ist, wird über das zwischengeschaltete Planetengetriebe und die Kraftmeßzelle das von den Rollen zu dem Gebläserad übertragene Belastungsmoment unmittelbar gemessen, so daß die Temperaturabhängigkeit der Gebläsearbeit kompensiert ist. Bei diesem Rollenprüfstand kann die abgegebene Leistung des Kraftfahrzeuges über das Belastungsmoment und die mit einem Tachometer gemessene Geschwindigkeit des Gebläserades bestimmt werden.

Nachteilig ist jedoch bei den bekannten Prüfständen auch, daß sie keine Mittel zur Stabilisierung der Belastungscharakteristiken oder zur Einstellung einer gewünschten, vorher angegebenen Belastungscharakteristik aufweisen. Solche Regelmittel können auch später in die bekannten Prüfstände wegen ihrer Konstruktionsgegebenheiten nicht eingebaut werden. Die Wirkung dieses Mangels wird nachstehend erläutert.

Die Prüfung der Wirkungsgradcharakteristiken des Motors können am vorteilhaftesten beim eingebauten Motor bestimmt werden, wobei die Aufwände und Probleme im Zusammenhang mit dem Aus- und Einbauen des Motors nicht entstehen. Folglich haben nur solche Prüfstände eine praktische Bedeutung, mit denen der Motor im eingebauten Zustand geprüft werden kann. Zum Zwecke solcher indirekten Messungen ist die Bestimmung des Gesamtwirkungsgrades des Motors, des zum stationären Fahrzeugbetrieb (konstante Geschwindigkeit, konstantes Moment) gehörenden und auf die Wegeinheit bezogenen Kraftstoffverbrauches besonders geeignet, dessen Wert zu dem während des Messens auf die Räder des Fahrzeuges wirkenden Moment und zu dem die Energieausnutzung des Fahrzeuges bestimmenden Gesamtwirkungsgrad proportional ist. Wenn also das die Räder des Fahrzeuges belastende Moment bekannt ist und während der Prüfung konstant bleibt, steht der erhaltene Kraftstoffverbrauch im direkten Zusammenhang mit dem zu dem geprüften Betriebszustand des Fahrzeuges gehörenden Gesamtwirkungsgrad. Die von der Drehzahl und dem Moment abhängende Gesamtwirkungsgradfunktion des eingebauten Motors ist durch zahlreiche Faktoren z. B. durch den Voreinspritzzeitpunkt, bzw. die Einstellung und den Wert der Frühzündung, die Mischungsbildung usw. beeinflußt. Die Messungen sollten daher zur schnellen Auswertung des Wirkungsgrades, bzw. zur Feststellung der den Wirkungsgrad beeinflussenden Fehler in solchen Betriebszuständen durchgeführt werden, in denen die Wirkung der erwähnten Faktoren die größte ist und in dieser Weise die Möglichkeit des Nachweisens der unerwünschten Einflüsse maximal ist.

Dieser Meßvorgang kann mit vorgewählten typenspezifischen Belastungscharakteristiken gut handhabbar sein und leicht realisiert werden. Zu diesem Zwecke sind aber die vorbekannten Prüfstände nicht geeignet. Die angewendete Belastungscharakteristik muß noch dazu dem jeweiligen Typ des geprüften Fahrzeuges entsprechend veränderbar sein, jedoch muß eine gegebene Charakteristik in ihrem Wert und ihrer Charakter unveränderlich sein.

Zusammenfassend kann festgestellt werden, daß die bekannten Prüfstände zur Fahrzeugdiagnostik nicht geeignet sind, eine geregelte Belastung zu erzeugen. Sie sind also zur zeitgemäßen Motorprüfung bei eingebauten Motoren sowie zur exakten Bestimmung des Kraftstoffverbrauchs unfähig.

Die Aufgabe der Erfindung sind das Eliminieren der Unzulänglichkeiten der bekannten Lösungen und die Schaffung eines in eingangs erwähnter Art ausgebildeten Rollenprüfstandes zur Kraftfahrzeugdiagnostik, mit welchem beliebige und geregelte Belastungscharakteristiken erstellt werden können und an welchem die durchgeführten Prüfungen ein exakteres Ergebnis liefern, die durch die konstruktionsabhängigen Ungenauigkeiten der bekannten Prüfstände nicht beeinträchtigt sind.

Die zur Erfüllung der gesetzten Aufgabe führende erfindungsgemäße Weiterentwicklung besteht nunn darin, daß die Rollen einen derart großen Durchmesser haben, daß mit dem Straßenfahrtbetrieb vergleichbare Prüfbedingungen erhalten werden, daß das Planetengetriebe in eine der Rollen eingebaut ist und der gemeinsamen Achse der Rollen ein Weg-Signalgeber zugeordnet ist, und daß die Bremse als Wirbelstrombremse mit einer Erregerschaltung ausgebildet ist, an welcher eine die Belastungskennlinien während der Diagnostizierung konstant haltende Steuerschaltung angeschlossen ist, an deren Eingängen die Kraftmeßzelle und der Weg-Signalgeber angeschlossen sind.

Nach einer erfindungsgemäß bevorzugten Ausführungsform ist der Planetenradträger des Planetengetriebes an den Rollen des Prüfstandes, das Sonnenrad an der Wirbelstrombremse und das Hohlrad an der Kraftmeßzelle angeschlossen. In einer alternativer Ausführungsform kann das Hohlrad an den Rollen und der Planetenradträger an der Kraftmeßzelle angeschlossen werden. Eine äußerst einfache Realisierungsmöglichkeit des Planetengetriebes in dieser Erfindung ergibt sich, wenn als solches die Zahnradübersetzung einer Hinterachsenbrücke eines Kraftfahrzeuges angewendet wird.

Zur Aufnahme der unerwünschten Schwingungen und der schlagartigen Belastungen kann vorteilhafterweise ein Schwingungsdämpfer zwischen der Kraftmeßzelle und dem Planetengetriebe eingebaut sein.

Die Steuerschaltung kann einfach realisiert werden, wenn sie mit einer den Soll-Wert herstellenden Schaltung und mit einer den Ist-Wert herstellenden Schaltung sowie mit einer den Soll-Wert und den Ist-Wert vergleichenden und im Notfall ein Eingriffsignal herstellenden Schaltung versehen wird.

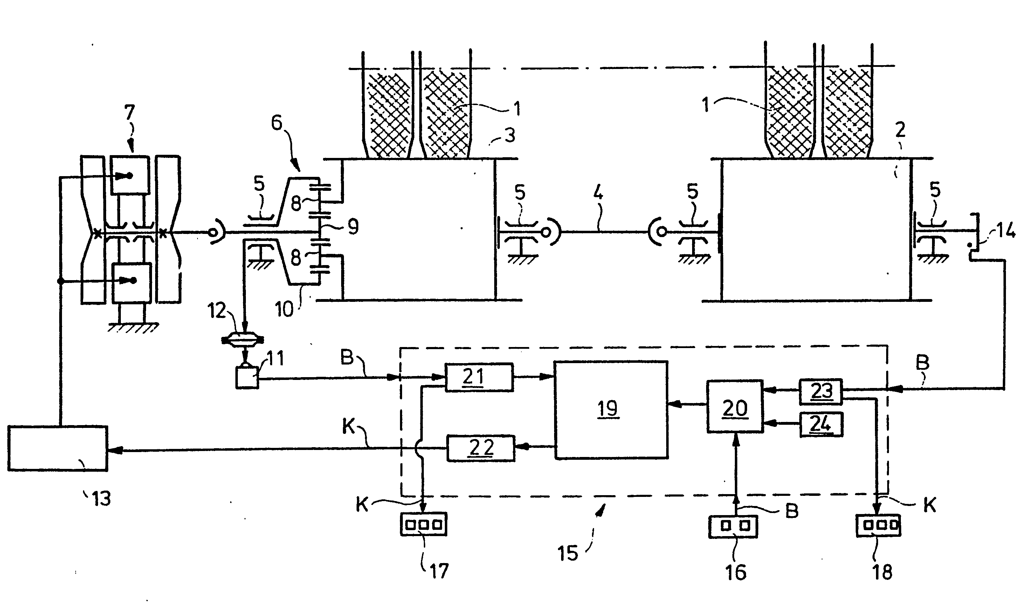

Die Erfindung wird nachstehend unter Bezugnahme auf die beigefügte Zeichnung im Zusammenhang mit Ausführungsbeispielen näher erläutert.

In der Zeichnung zeigt die einzige Figur den schematischen Aufbau einer Ausführungsform des erfindungsgemäßen Rollenprüfstandes.

Wie aus der Figur ersichtlich, liegen zum Beginn der Prüfung die angetriebenen Räder 1 eines zu prüfenden Fahrzeuges auf Rollen 2 und 3 auf. Die Rollen 2, 3 sind durch eine Achse 4 momentübertragend miteinander verbunden und in Lagern 5 abgestützt. An der einen, in der Figur linken Rolle 3 ist ein Planetengetriebe 6 angeschlossen, das mit einer Wirbelstrombremse 7 verbunden ist.

In der Figur ist die vorteilhafte Ausführungsform veranschaulicht, in der die Zahnradübersetzung einer Hinterachsenbrücke eines Kraftfahrzeuges als Planetengetriebe 6 angewendet wird. Diese Zahnradübersetzung kann als Planetengetriebe 6 in die Rolle 3 eingebaut werden, so daß damit mindestens ein Teil des Innenraumes der Rolle 3 nutzbar gemacht werden kann. In diesem Beispiel sind der Träger der Planetenräder 8 des Planetengetriebes 6 an der Rolle 3 befestigt und das Sonnenrad 9 mit der Wirbelstrombremse 7 und das Hohlrad 10 mit einer Kraftmeßzelle 11 verbunden. In anderen Ausführungsformen kann das Hohlrad 10 an der Rolle 3 und der Träger der Planetenräder 8 an der Kraftmeßzelle 11 angeschlossen sein.

Zwischen dem Planetengetriebe 6 und der Kraftmeßzelle 11 ist ein Schwingungsdämpfer eingebaut, der in der Figur mit der Bezugszahl 12 bezeichnet ist. Dieser ist in diesem Beispiel ein hydraulischer Schwingungsdämpfer mit Gummigehäuse.

An die Wirbelstrombremse 7 ist wie gewöhnlich eine Erregerschaltung 13 angeschlossen. Der gemeinsamen Achse der Rollen 2 und 3 ist ein Weg-Signalgeber 14 zugeordnet.

Wie schon früher erwähnt, ist der Prüfstand in dieser Erfindung mit einer Steuerschaltung 15 versehen, die in der Figur mit gestrichelter Linie umgrenzt ist. Ihre Eingänge sind mit dem Bezugsbuchstaben B, und ihre Ausgänge mit K bezeichnet. An die Eingänge B sind die Kraftmeßzelle 11, der Weg-Signalgeber 14 und Bedienungsorgane 16 angeschaltet. Die Ausgänge K sind mit Anzeigegeräten 17 und 18 verbunden.

Die zentrale Einheit der Steuerschaltung 15 ist als eine Regelschaltung 19 ausgeführt, die einerseits mit einer den Soll-Wert erzeugenden Schaltung 20 und einer den Ist-Wert erzeugenden Schaltung 21, andererseits mit einer Eingriffsignale erzeugenden Schaltung 22 verbunden ist. An die Eingänge der Schaltung 20 sind ein Signalumformer 23 und ein Signalgenerator 24 angeschaltet. In die Schaltung 21 werden die Signale von der Kraftmeßzelle 11 durch den einen Eingang B der Steuerschaltung 15 geleitet. Der an den anderen Eingang B geschaltete Weg-Signalgeber 14 ist mit dem Signalumformer 23 verbunden. Die Bedienungsorgane 16 sind durch den dritten Eingang B der Schaltung 20 angeschlossen. Die Erregerschaltung 13 wird durch den einen Ausgang K der Steuerschaltung 15 von der Schaltung 22 mit Signalen versehen. Die den Ist-Wert erstellende Schaltung 21 ist durch den einen Ausgang K mit dem Anzeigegerät 17 und der Signalumformer 23 durch einen anderen Ausgang K mit dem Anzeigegerät 18 verbunden.

Der erfindungsgemäße Rollenprüfstand arbeitet wie folgt.

Wie schon früher erwähnt, ist der erfindungsgemäße Rollenprüfstand geeignet, ein solches Belastungsmoment auf die auf den Rollen 2 und 3 des Prüfstandes laufenden Räder 1 des zu prüfenden Fahrzeuges zu geben, dessen Kennlinie in Abhängigkeit von der Geschwindigkeit geregelt und unabhängig von der Betriebsgüte anderer Bauelemente des Prüfstandes, z. B. von dem Wirkungsgrad, von dem Wärmezustand der Wirbelstrombremse 7 oder von den Getriebeverlusten des Planetengetriebes 6, ist. Mit der elektronischen Regelschaltung 19 wird während des Messens mit Hilfe des in der Schaltung 21 befindlichen Verstärkers und Meßgrenzeinstellers, d.h. der Kalibriereinheit, das an den Rollen 2 und 3 entstandene augenblickliche Belastungsmoment beobachtet. Bei der in der Figur gezeigten Ausführungsform erfolgt das dadurch, daß das Planetengetriebe 6 mit seinem Hohlrad 10 eine Kraft über den Schwingungsdämpfer 12 auf die Kraftmeßzelle 11 ausübt, die danach ein Signal liefert. Dieses Signal wird durch einen Eingang B in die den Ist-Wert erstellende Schaltung 21 eingegeben. Die Regelschaltung 19 beobachtet aber nicht nur das augenblickliche Belastungsmoment als einen Ist-Wert, sondern sie bekommt auch den Soll-Wert von der Schaltung 20. In dieser Schaltung 20 ist ein Charakteristikgenerator eingebaut, der die Charakteristik des Belastungsmomentes in Abhängigkeit von der Geschwindigkeit angibt. Die momentane Geschwindigkeit wird über den Weg-Signalgeber 14 und den Signalumformer 23 in die Schaltung 20 eingegeben. Die Regelschaltung 19 vergleicht im weiteren das von der Schaltung 21 ankommende momentane Belastungsmoment mit der durch die Schaltung 20 erstellten Signalcharakteristik und gibt nötigenfalls, d.h. bei einem allzugroßen unterschied zwischen den beiden Signalen, mit Hilfe der das Eingriffssignal erstellenden Schaltung 22 einen Eingriffsbefehl ab.

In der Schaltung 22 ist ein die Erregerschaltung 13 der Wirbelstrombremse 7 beeinflussender Schaltkreis angeordnet.

Dem Eingriffsignal entsprechend wird der Erregerstrom der Wirbelstrombremse 7 verändert, bis sich das von dem Charakteristikgenerator verlangte Belastungsmoment einstellt, d. h. bis von den Schaltungen 20 bzw. 21 die gleichen Signale in die Regelschaltung 19 gelangen.

Mit den an der Schaltung 20 angeschlossenen Betriebsorganen 16 kann die zu einem gegebenen Fahrzeug gehörende Belastungscharakteristik ausgewählt werden. Die Prüfungen können besser beobachtet und unter Kontrolle gehalten werden, wenn der aktuelle Wert des Belastungsmomentes und der momentane Wert der Geschwindigkeit von dem an der Schaltung 21 angeschlossenen Anzeigegerät 17, beziehungsweise von dem an den Signalumformer 23 angeschlossenen Anzeigegerät 18 angezeigt werden.

Der Charakteristikgenerator erzeugt also in Abhängigkeit von der vorgewählten Geschwindigkeit des Kraftfahrzeuges die Belastungsmoment-Kennlinien. Die die Form dieser Kennlinien beeinflussenden Parameter und Konstanten können vor der Prüfung an den Bedienungsorganen 16 vorgewählt und eingestellt werden.

Die Steuerschaltung 15 ermöglicht aber auch einen Fahrzeugbetrieb mit konstanter Geschwindigkeit während des Messens, wobei bis zum Erreichen dieser Geschwindigkeit das Belastungsmoment Null ist und nach Erreichen der Geschwindigkeit auch das Belastungsmoment seinen maximalen Wert in einem gegebenen Geschwindigkeitsbereich erreicht. Diese Regelungen werden natürlicherweise automatisch verwirklicht; bei der Prüfung muß also nur die Geschwindigkeit an dem Anzeigegerät 18 beobachtet und wie gewünscht eingestellt bzw. auf dem eingestellten Wert gehalten werden. Die Anzeige des Belastungsmomentes ist nur beim Kalibrieren unbedingt nötig.

Ein großer Vorteil der Prüfungen mit dem erfindungsgemäßen Prüfstand kann darin erblickt werden, daß der Kraftstoffverbrauch unter sehr verschiedenen Umständen in allen Betriebszuständen schnell und genau gemessen und bestimmt werden kann. Der Prüfstand ist geeignet, mit Hilfe der den verschiedenen Kraftfahrzeugtypen entsprechend vorgewählten, elektronisch geregelten, von äußeren Einflüssen unabhängig gemachten, in Funktion der Geschwindigkeit linear oder parabolisch ansteigenden kalibrierten Belastungskennlinien den Kraftstoffverbrauch und die Kraftstoffdosis zu messen. Es können im Betrieb mit konstanter Geschwindigkeit die in einem Zyklus verbrauchte Kraftstoffmenge (Dosis), bzw. die Fördercharakteristik des mischungsbildenden Systems für die ganze Belastungskennlinie bestimmt werden. Die Belastung kann aber auch beliebig von Hand eingestellt werden. Es können dabei der in dem Fahrzeug eingebaute Kilometerzähler oder der Tachometer, sowie der Fahrtschreiber kontrolliert werden. Im ganzen Betriebsbereich des Fahrzeuges können die Zugkraft und die Radleistung bestimmt werden. Behördliche Überprüfungen können im Hinblick auf die Geräusch-, Rauch und Gasemission durchgeführt werden. Das Kraftübertragungssystem kann mit Hilfe des erfindungsgemäßen Prüfstandes unter Belastung geprüft werden. Wegen seines konstruktiven und schaltungstechnischen Aufbaus kann er mit beliebigen Steuerungssystemen (Fahrtzyklen, programmgesteuerte diagnostische Prüfungen) verbunden bzw. durch diese ergänzt werden.

In einer anderen Ausführungsform der Erfindung kann der Prüfstand nicht nur zwei Rollen 2 und 3, sondern zu diesen parallel noch weitere Rollen haben, die jedoch paarweise angeordnet sind. Dies ist vorteilhaft bei Prüfungen von solchen Schwerkraftfahrzeugen, bei denen die angetriebenen Räder auf zwei parallelen Achsen angeordnet sind. Diese ergänzenden Räder sind freilaufend gelagert.

Für die Rollen 2 und 3 sowie auch die zusätzlichen Rollen ist es vorteilhaft, diese mit relativ großem Durchmesser anzufertigen. Mit dieser Maßnahme können die zusätzlichen Verluste zwischen den Rollen und den Rädern des Fahrzeuges vermindert bzw. eliminiert, sowie ähnliche Bedingungen wie bei dem auf der Straße entstehenden Fahrtbetrieb simuliert werden.

## Patentansprüche

1. Rollenprüfstand zur Diagnostizierung von Kraftfahrzeugen, der an die Räder (1) des zu prüfenden Fahrzeuges angeschlossene und miteinander verbundene Rollen (2, 3) mit gemeinsamer Achse (4), eine an die Rollen (2, 3) angeschlossene einstellbare Bremse (7), ein Planetengetriebe (6) zwischen den Rollen (2, 3) und der Bremse (7) und eine dem Planetengetriebe (6) zugeordnete Kraftmeßzelle (11) aufweist, dadurch gekennzeichnet, daß die Rollen (2, 3) einen derart großen Durchmesser haben, daß mit dem Straßenfahrtbetrieb vergleichbare Prüfbedingungen erhalten werden, daß das Planetengetriebe (6) in eine (3) der Rollen (2, 3) eingebaut ist und der gemeinsamen Achse (4) der Rollen (2, 3) ein Weg-Signalgeber (14) zugeordnet ist und daß die Bremse als Wirbelstrombremse mit einer Erregerschaltung (13) ausgebildet ist, an welcher eine die Belastungskennlinien während der Diagnostizierung konstant haltende Steuerschaltung (15) angeschlossen ist, an det die Kraftmeßzelle (11) und der Weg-Signalgeber (14) angeschlossen sind.

2. Rollenprüfstand nach Anspruch 1, dadurch gekennzeichnet, daß der Träger der Planetenräder (8) des Planetengetriebes (6) an den Rollen (2, 3), das Sonnenrad (9) an der Wirbelstrombremse (7) und das Hohlrad (10) an der Kraftmeßzelle (11) angeschlossen ist.

3. Rollenprüfstand nach Anspruch 1, dadurch gekennzeichnet, daß das Hohlrad (10) an den Rollen (2, 3) und der Träger der Planetenräder (8) an der Kraftmeßzelle (11) angeschlossen ist.

4. Rollenprüfstand nach einem der vorangehenden Ansprüche, dadurch gekennzeichnet, daß als Planetengetriebe (6) eine Zahnradübersetzung einer Hinterachsenbrücke eines Kraftfahrzeuges angewendet ist.

5. Rollenprüfstand nach einem der Ansprüche 2 bis 4, dadurch gekennzeichnet, daß zwischen der Kraftmeßzelle (11) und dem Planetengetriebe (6) ein Schwingungsdämpfer (11) eingebaut ist.

6. Rollenprüfstand nach einem der Ansprüche 1 bis 5, dadurch gekennzeichnet, daß an die Eingänge (B) der Steuerschaltung (15) die Kraftmeßzelle (11), der Weg-Signalgeber (14) und Bedienungsorgane (16), und an ihre Ausgänge (K) die Erregerschaltung (13) und Anzeigegeräte (17, 18) angeschlossen sind.

## Claims

1. Roller test stand for the diagnostics of motor vehicles comprising rolls (2, 3) connected to wheels (1) of the vehicle to be tested and to each other and having a common axle (4), an adjustable brake (7) connected to the rolls (2, 3), a planet gear (6) between the rolls (2, 3) and the brake (7), and a force measuring cell (11) connected to the planet gear (6), characterized in that the rolls (2, 3) have such a big diameter that test conditions comparable to normal street operation are produced, that the planet gear (6) is built into one (3) of the rolls (2, 3) and a displacement signalizer (14) is connected to the common axle (4) of the rolls (2, 3), and the brake (7) is formed as an eddy current brake having an exciting circuit (13) to which a control circuit (15) is connected holding the loading characteristics to constancy during the test operation, the force measuring cell (11) and the displacement signalizer (14) being connected to said control circuit (15).

2. Roller test stand according to claim 1, characterized in that the holder of the planet gear wheels (8) of the planet gear (6) is connected to the rolls (2, 3), the sun gear wheel (9) is connected to the eddy current brake (7) and the hollow gear wheel (10) is connected to the force measuring cell (11).

3. Roller test stand according to claim 1, characterized in that the hollow wheel (10) is connected to the rolls (2, 3) and the holder of the planet gear wheels (8) is connected to the force measuring cell (11).

4. Roller test stand according to any of claims 1 to 3, characterized in that a gear wheel transmission of a rear axle bridge of a motor vehicle is used as the planet gear (6).

5. Roller test stand according to any one of claims 2 to 4, characterized in that a shock absorber (12) is arranged between the force measuring cell (11) and the planet gear (6).

6. Roller test stand according to any one of claims 1 to 5, characterized in that the force measuring cell (11), the displacement signalizer (14) and operating organs (16) are connected to inputs (B) of the control circuit (15), and the exciting circuit (13) and display means (17, 18) are connected to the outputs (K) of the control circuit (15).

## Revendications

1. Banc d'essai à rouleaux pour examiner des véhicules automobiles, comportant des rouleaux (2, 3) à axe (4) commun reliés entre eux et reliés aux roues (1) du véhicule à examiner, un frein réglable (7) relié aux rouleaux (2, 3), un train d'engrenages épicycloïdal (6) disposé entre les rouleaux (2, 3) et le frein (7), ainsi qu'une cellule dynamométrique (11) associée audit train d'engrenages épicycloïdal, caractérisé en ce que les rouleaux (2, 3) présentent un diamètre tel qu'on obtienne des conditions d'essai (d'examen) comparable à celles qui prévalent lors de l'utilisation sur la route, en ce que le train d'engrenages épicycloïdal (6) est monté dans l'un (3) des rouleaux (2, 3), en ce qu'un générateur de signal de trajet (14) est associé à l'axe commun (4) des rouleaux (2, 3), et en ce que le frein est un frein à courants de Foucault pourvu d'un circuit d'excitation (13) auquel est relié un circuit de commande (15) qui maintient les caractéristiques de charge constantes pendant l'examen, ladite cellule dynamométrique (11) et ledit générateur de signal de trajet (14) étant reliés audit circuit de commande.

2. Banc d'essai à rouleaux selon la revendication 1, caractérisé en ce que le porte-satellites (8) du train d'engrenages épicycloïdal (6) est relié aux rouleaux (2, 3), la roue planétaire (9) étant reliée au frein à courants de Foucault (7) et la roue à denture intérieure (10) étant reliée à la cellule dynamométrique (11).

3. Banc d'essai à rouleaux selon la revendication 1, caractérisé en ce que la roue à denture intérieure (10) est reliée aux rouleaux (2, 3), cependant que le porte-satellites (8) est relié à la cellule dynamométrique (11).

4. Banc d'essai à rouleaux selon une des revendications précédentes, caractérisé en ce que l'on utilise comme train d'engrenages épicycloïdal (6) une transmission à engrenages d'un pont arrière d'un véhicule automobile.

5. Banc d'essai à rouleaux selon l'une des revendications 2 à 4, caractérisé en ce qu'un amortisseur (12) est interposé entre la cellule dynamométrique (11) et le train d'engrenages épicycloïdal (6).

6.. Banc d'essai à rouleaux selon l'une des revendications 1 à 5, caractérisé en ce que les entrées (B) du circuit de commande (15) sont reliées à la cellule dynamométrique (11), au générateur de signaux de trajet (14) et à des organes de service, cependant que les sorties (K) dudit circuit de commande sont reliées au circuit d'excitation (13) et à des appareils indicateurs (17, 18).

0 131 642